Europäisches Patentamt

European Patent Office

Office européen des brevets

(11) Publication number: **0 065 785**
**B1**

(12) **EUROPEAN PATENT SPECIFICATION**

(45) Date of publication of patent specification: **09.04.86**

(51) Int. Cl.⁴: **G 02 B 17/06, B 23 K 26/02**

(21) Application number: **82104570.5**

(22) Date of filing: **25.05.82**

(54) **Waveguide for laser beams.**

(30) Priority: **26.05.81 JP 80593/81**

(43) Date of publication of application:
**01.12.82 Bulletin 82/48**

(45) Publication of the grant of the patent:
**09.04.86 Bulletin 86/15**

(84) Designated Contracting States:
**DE FR GB SE**

(56) References cited:
**EP-A-0 019 447**
**DE-A-2 827 639**
**US-A-3 224 330**
**US-A-3 353 893**
**US-A-4 037 943**

**Handbook of Optics, p. 2-53**

**Longhurst, Geometrical and Physical Optics, p. 370, 371**

(73) Proprietor: **SUMITOMO ELECTRIC INDUSTRIES LIMITED**
**No. 15, Kitahama 5-chome Higashi-ku Osaka-shi Osaka 541 (JP)**

(72) Inventor: **Ono, Kimizo**
**c/o Osaka Works Sumitomo Electric Industries Ltd.**
**1-3 Shimaya 1-chome Konohana-ku Osaka (JP)**
Inventor: **Takenaka, Shinya**
**c/o Osaka Works Sumitomo Electric Industries Ltd.**
**1-3 Shimaya 1-chome Konohana-ku Osaka (JP)**
Inventor: **Sunago, Katsuyoshi**
**c/o Osaka Works Sumitomo Electric Industries Ltd.**
**1-3 Shimaya 1-chome Konohana-ku Osaka (JP)**

(74) Representative: **Hänzel, Wolfgang, Dipl.-Ing. et al**
**Patentanwälte Henkel, Feiler & Hänzel**
**Möhlstrasse 37**
**D-8000 München 80 (DE)**

Courier Press, Leamington Spa, England.

**0 065 785**

**Description**

This invention relates to a waveguide for parallel beams emitted from a laser comprising a combination of at least two concave mirrors disposed in series in the beam path, for use in laser-utilizing devices such as laser-utilizing machine tools or laser-utilizing surgical knives.

Laser-utilizing machine tools for cutting, drilling, or fusion-welding metallic and other organic materials by the use of electromagnetic wave energy generated by the electrical excitation of gases such as helium, neon, or carbon dioxide, or a solid such as YAG, have acquired a very important position in the industrial field.

Some of the apparatuses employing carbon dioxide lasers will be used in the field of the manufacture and processing of precision toothed wheels. Now in practical use is a $CO_2$ laser surgical knife, which is appreciated due to its capability of positionally accurate application to the diseased part and its instantaneous hemostatic effect.

Usually, a waveguide for a laser beam is obtained by a combination of mirrors and optical lenses. For example, flat mirrors have so far been used in the waveguide for the laser surgical knife. Since laser beams are parallel to each other, the transmission of the beams without a change in the diameter of a plurality of parallel beams would seem to be possible by a combination of flat mirrors and the formation of a waveguide in a shape and size as desired. However, in practice, the diameter of a "bundle" of such laser beams gradually expands due to the angular expansion of the beam. In the case of a carbon dioxide laser, the diameter of a beam bundle may double within a 2 meter distance.

Concerning the problem of astigmatism, EP—A—0 019 447 discloses an optical system comprising three mirrors. Two of the mirrors have a conic elipsoide surface and the third has a conic hyperpoloide surface. Such, this known system comprises a rather complicated mirror arrangement.

The object of this invention is to provide a waveguide for light beams capable of eliminating focal aberration in both the vertical and transverse directions by a simple combination of mirrors.

According to the present invention, this object is achieved in a waveguide as initially mentioned, which is characterized in that said at least two concave mirrors are spherical mirrors and are arranged in a skew relation such that the normals of the mirrors are laying in different planes.

Fig. 1 is an illustrative view showing two concave mirrors $M_a$ and $M_b$ disposed askew with each other at an interval l, in which light beams fall and are reflected at angles $\theta_1$ and $\theta_2$, respectively, so as to form a vertically and transversely common focus F at a distance b behind the mirror $M_b$;

Fig. 2 is a view of light beams, in which is shown a solution $R_1(+)$ for a larger radius of curvature $R_1$ when a common focus F is formed at a distance b behind two concave mirrors arranged in skew positions and at an interval l;

Fig. 3 is a view of light beams, in which is shown a solution $R_1(-)$ for a smaller radius of curvature $R_1$ under the same conditions as in Fig. 2;

Fig. 4 is an illustrative view of an example, in which distances between two conjugate mirrors $M_1$ and $M_2$, between $M_3$ and $M_4$, and between $M_2$ and $M_3$ are 100, 60, and 1.350 mm, respectively, and incident parallel beams falling on the mirror $M_1$ are reflected by the mirror $M_4$ after being transformed into another type of parallel beam;

Fig. 5 is a view of a light beam, in which a pair of conjugate mirrors $M_1$ and $M_2$ and another pair $M_3$ and $M_4$ are considered as an optical system equivalent to convex or concave lenses and the transformation of a system of parallel light beams into another parallel beam having a different diameter is proved to be possible;

Fig. 6 is a view of a light beam for proving that the same result as in Fig. 5 can be obtained by a combination of a convex lens and a concave one; and,

Fig. 7 is a schematic view of a surgical laser knife, in which the concept of the present invention is utilized by the mirrors $M_1$, $M_2$, $M_3$, and $M_4$.

When light falls or is reflected along the normal of a concave mirror, the focal length f is equal to a half of the radius of curvature R of the concave surface. The focal length, however, is different for light falling along a beam axis inclined with respect to the normal passing through the center of the concave surface mirror. The focal lengths f are different from each other according to the direction, vertical or transverse, along the sectional plane of the light beam bundle.

If a laser beam bundle is cross-sectionally circular, it is deformed to be elliptical when reflected by the concave surface mirror, that is to say, an aberration appears.

The laws of reflection at spherical surfaces are described e.g. in Longhurst, Geometrical and Physical Optics, second Edition, p. 370, 371.

Generally, when a parallel light beam falls onto a concave surface mirror M whose radius of curvature is R at an incident angle $\theta$ with respect to the normal of the mirror, the following equations are valid:

$$fl = \frac{R}{2} \cos \theta \qquad (1) \qquad\qquad f_t = \frac{R}{2 \cos \theta} \qquad (2)$$

2

When the incident direction deviates from $\theta = 0$, a separation of focal lengths in the two planes invariably occurs. When mirrors are used in the waveguide for the light beams, it is rare that the direction of incidence agrees with $\theta = 0$, and, therefore, the separation of focal lengths always occurs with the use of spherical surface mirrors in the waveguide. Even if the bundle of light beams is cross-sectionally circular, it is always deformed into an ellipse when reflected by the spherical mirror. When light beams are repeatedly reflected by spherical mirrors, the cross-sectional shape of the beam bundle becomes complex and can be narrowed no further.

Since the focal lengths in both vertical and transverse directions differ from each other when one concave mirror is used, it can be expected that the additional use of another concave mirror disposed so that the directions of light beams are reversed vertically and transversely to those in the first mirror, namely, disposed in a skew position, enables the formation of a common focus F behind this additional mirror.

Equations (1), and (2) for the focal length hold for a convex surfaced mirror in the same way as for a concave one, however, R has a negative sign.

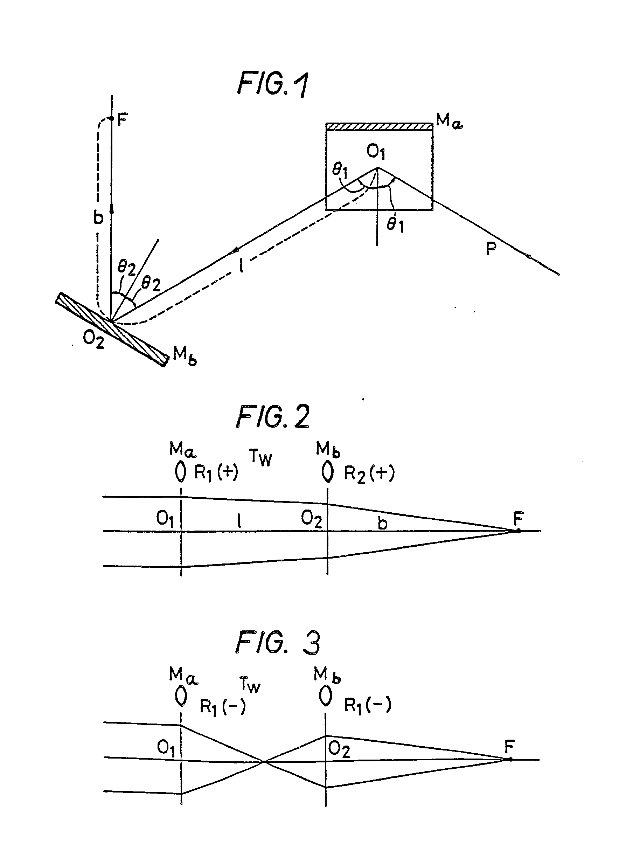

Fig. 1 shows an arrangement in which mirrors $M_a$ and $M_b$ are disposed in skew positions at an interval $l$ so that a light beam P is reflected by the first mirror $M_a$ and then by $M_b$ and a single focus point F results at a point apart by a distance b from the mirror $M_b$.

When the distances of the images in front and at the rear of the mirrors are expressed by a and b, respectively, as well as the focus by f, a well-known equation holds as follows:

$$\frac{1}{a} + \frac{1}{b} = \frac{1}{f} \tag{3}$$

The bundle of light beams P is a bundle of laser beams and, therefore, a bundle of parallel beams ($a \rightarrow \infty$). The vertical components of the light beams and the transverse components thereof form images at positions distant by $fl_1$ and $f_{t1}$ from the mirror $M_a$ respectively. These images fall on the mirror $M_b$ so that a $= -(fl_1 - l), -(f_{t1} - l)$. The formation of a single image at a point         that is, the mirrors $M_a$ and $M_b$ will be conjugate, only if the following equations hold:

positions distant by $fl_1$ and $f_{t1}$ from the mirror $M_a$ respectively. These images fall on the mirror $M_b$ so that $a= -(fl_1 - l), -(f_{t1} - l)$. The formation of a single image at a point $F (O_2F = b)$, that is, the mirrors $M_a$ and $M_b$ will be conjugate, only if the following equations hold:

$$\frac{l}{f_{t2}} = -\frac{1}{f_1 - l} + \frac{1}{b} \tag{5}$$

The above equation (4) indicates that beams as transverse components whose focus is formed at a position distant from the mirror $M_a$ fall on the mirror $M_b$ as vertical components and are focused at a point closer to the mirror surface to form an image at a point b.

By letting the radii of curvatures of the mirrors $M_a$ and $M_b$ be $R_1$ and $R_2$; the angles of incidence be $\theta_1$ and $\theta_2$, respectively, and by substituting equations (1) and (2) for (4) and (5), respectively, the following equations are obtained:

$$\frac{1}{R_2 \cos \theta_2} + \frac{\cos \theta_1}{R_1 - 2l \cos \theta_1} = \frac{1}{2b} \tag{6}$$

$$\frac{\cos \theta_2}{R_2} + \frac{1}{R_1 \cos \theta_1 - 2l} = \frac{1}{2b} \tag{7}$$

By eliminating $R_2$ from the above, the following is obtained:

$$R_1^2 - 2(l\alpha + b\beta) R_1 + 4l(l + b) = 0 \tag{8}$$

where,

$$\alpha = \frac{1 + \cos_2 \theta_1}{\cos \theta_1} \tag{9}$$

$$\beta = (1 + \sin^2 \theta_1 \cot^2 \theta_2) \sec \theta_1 \tag{10}$$

The discriminant D is given as follows:

$$D = (l\alpha + b\beta)^2 - 4l\,(l + b) \tag{11}$$

Solutions for $R_1$ and $R_2$ are given as follows:

$$R_1 = \frac{(l\alpha + b\beta) \pm \sqrt{D}}{-2l} \tag{12}$$

$$R_2 = 2b\left(\frac{-2l}{R_1} + \beta\right)\cot\theta_1\,\mathrm{cosec}\,\theta_1\,\tan\theta_2\,\sin\theta_2 \tag{13}$$

Figs. 2 and 3 are illustrative views of light beams corresponding to $R_1(+)$ and $R_2(+)$ and to $R_1(-)$ and $R_2(-)$ in the concave mirror, respectively.

In these drawings, the mirror is indicated by a vertical line for simplicity, and the reflected beam is also indicated by a straight line for avoiding difficulties in drawing the actual reflected beams. Symbols appearing as convex and concave lenses indicate concave and convex mirrors, respectively. Reference characters $T_w$ and $L_w$ indicate an arrangement in which both mirrors are disposed in skew positions and one in which the normals of both mirrors lie on the same plane, respectively.

From the above description, it has become apparent that the separation of focal points in the vertical and transverse plane may be eliminated by a combination of two spherical surface mirrors, that is, the parallel beams can be collected at a common focus. In this way, the light beam system can be diametrally enlarged or narrowed at any arbitrary rate. For this purpose, a combination of mirrors $M_1$ and $M_2$ as well as a mirror group $M_3$ and $M_4$ are used.

The mirrors are arranged so that the rear focus of the mirror system of $M_1$ and $M_2$ coincides with the front focus of the mirror system of $M_3$ and $M_4$; and, further, the mirror $M_2$, the common focus $F_o$, and the mirror $M_3$ are all aligned, whereby the parallel beams are narrowed at the focus and then made parallel again.

The initial diameter $B_1$ and the final one $B_2$ can be chosen at any arbitrary ratio.

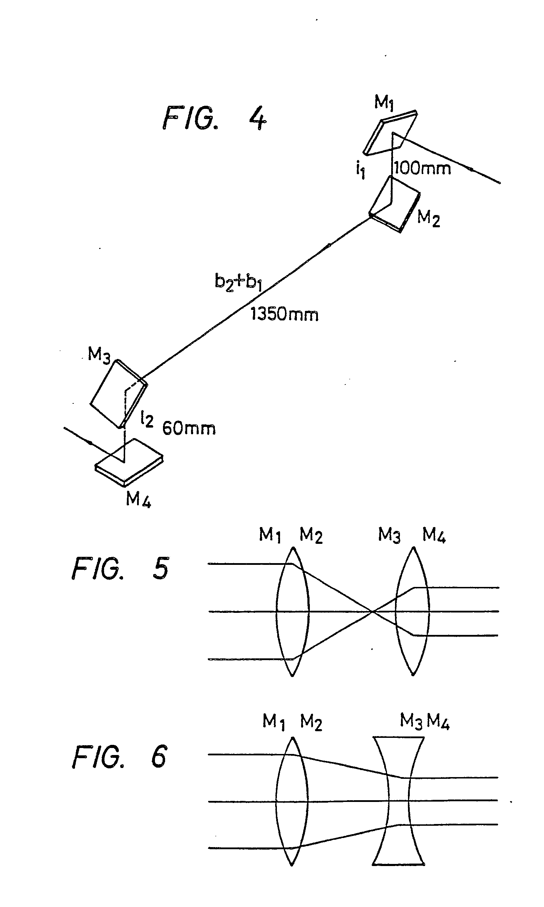

Let us consider an example of an arrangement including mirrors $M_1$ through $M_4$, as shown in Fig. 4. When the distances between $M_1$ and $M_2$, between $M_3$ and $M_4$, and between $M_2$ and $M_3$ are assumed to be 100 mm (= $l_1$), 60 mm (= $l_2$), and 1350 mm ($b_1 + b_2$), respectively, and mirrors $M_1$ and $M_2$ as well as $M_3$ and $M_4$ are disposed askew with respect to each other, the following relation is established for reducing the diameter of the light beam by half:

$$b_1 = 900\text{ mm}, \qquad b_2 = 450\text{ mm}$$

Assuming that:

$l_1/b_1 = 0.111$, $l_2/b_2 = 0.133$, $\theta_1 = \theta_2 = 45°$ we obtained:

$$\alpha_1 = \beta_1 = \frac{3}{2}\sqrt{2} = 2.121$$

From Eqs. (11) and (12);

$$R_1(+) = 4.150\text{ mm}$$

(The solution for $R_1(-) = 96$ mm is discarded).

From Eq. (13),

$$R_2(+) = 3.730\text{ mm}$$

Further, on the assumption that $\theta_3 = \theta_4 = 45°$, with respect to $M_3$ and $M_4$, from Eqs. (11) and (12),

$$R_4(+) = 2.100\text{ mm}$$

and from Eq. (13),

$$R_3(+) = 1.860\text{ mm}$$

Thus, the bundle of parallel laser beams can diametrally changed to any size by the use of two pairs of conjugate mirrors.

In the above example, the mirrors $M_3$ and $M_4$ are concave and disposed askew, but may be replaced by convex ones. In the latter case, the focus of $M_1$ and $M_2$ lies farther than the mirrors $M_3$ and $M_4$. That is to say, a point externally dividing the segment between $M_2$ and $M_4$ at a ratio of 2:1 is the focus of the mirror system of $M_1$ and $M_2$. The mirrors $M_3$ and $M_4$ have an imaginary focus, where the radii of curvatures $R_3$ and

$R_4$ (both are negative real numbers) can be calculated from Eqs. (11) and (12), paying attention to the fact that b is negative.

In conclusion, for reducing the diameter of a bundle of parallel beams by the use of mirrors $M_1$—$M_4$, the following combinations are available (Table 1).

The term "Equivalent optical lens system" means that the indicated arrangement of mirrors corresponds to an arrangement of convex and concave lenses appropriately combined in the order shown.

It should be noted, that arrangements related to non-skew ray tracings are not covered by the claims.

## TABLE 1

Combination of spherical mirrors for reduction of light beam bundle diameter

| | Spherical Surface / Mirror | | | | Equivalent Optical | |
|---|---|---|---|---|---|---|
| | $M_1$ | $M_2$ | $M_3$ | $M_4$ | Lens | System |
| 1 | concave | X concave | concave | X concave | convex | + convex |
| 2 | concave | X concave | convex | X convex | convex | + concave |
| 3 | concave | = convex | convex | = concave | convex | + convex |
| 4 | concave | = convex | concave | = convex | convex | + convex |
| 5 | concave | = convex | convex | = concave | convex | + concave |
| 6 | concave | = convex | concave | = convex | convex | + concave |
| 7 | concave | X concave | concave | = convex | convex | + convex |
| ⋮ | | | | | ⋮ | |
| 19 flat | concave = convex | | flat | | convex | + concave |

Legends:  convex, concave mirrors ;

X: mirrors disposed askew;

=: normals of mirrors lie in the same plane

(cases not covered by the claims).

For reducing the diameter of a bundle of beams, either a combination of a convex with a concave lens (Fig. 6) or a convex — convex pair (Fig. 5) is used in consideration of equivalent optical lens system.

There are three kinds of combinations which are equivalent to a convex lens:

1) Two concave mirrors disposed askew ($T_w$)

2) A concave mirror + a convex mirror, in which the normals and beam axes thereof lie in the same plane ($L_w$)

3) A convex mirror + a concave mirror, in which the normals and beam axes lie in the same plane ($L_w$)

There are also three kinds of mirror arrangements equivalent to a concave lens.

Therefore, the number of mirror arrangements equivalent to (convex − convex) lenses is ($3 \times 3 = 9$), and those equivalent to (convex + concave) lenses is ($3 \times 3 = 9$), as well. In total, therefore, eighteen arrangements are available.

The 19th arrangement, as shown in Table 1, is not capable or re-producing strictly parallel beams, but is nonetheless practical.

Calculations for the first example in Table 1, with respect to the arrangement shown in Fig. 4 has been presented above. Calculations for the second example, i.e., a concave-concave-convex-convex arrangement, will be presented. In this case, since a focus is formed at a point externally divided by the term ($b_1 + b_2$), the following results are obtained:

$b_1 = 2.700$ mm
$b_2 = -1.350$ mm
where: $\theta_1 = \theta_2 = 45°$ (assumed)

$l_1/b_1 = 0.037$
$l_2/b_2 = 0.0444$

From Eqs. (11), (12), and (13);
$R_1 = 11.780$ mm
$R_2 = 11.360$ mm

Correspondingly to the above are obtained:
$R_3 = -5.700$ mm
$R_4 = -5.530$ mm

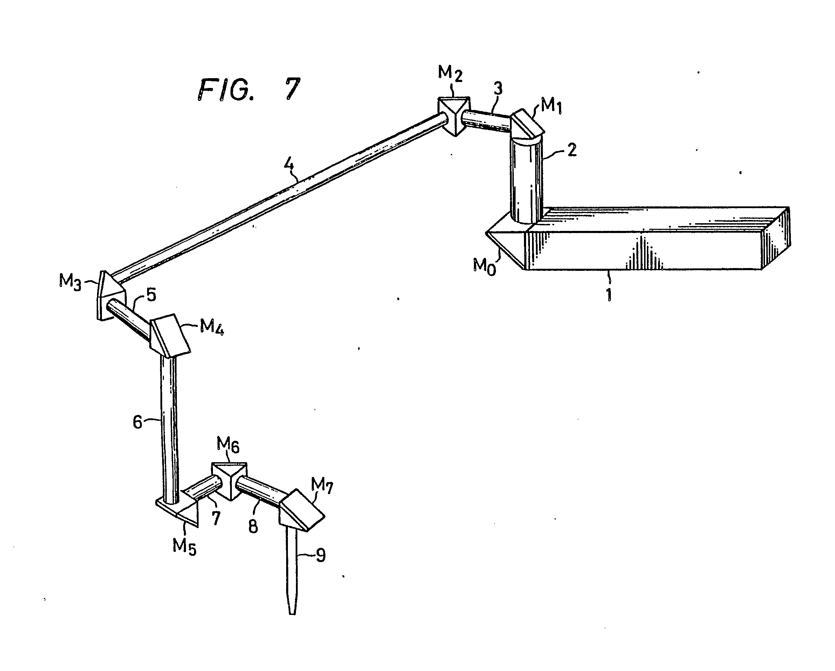

The waveguide for light beams according to the present invention is applicable to a variety of apparatus using laser beams. Fig. 7 is a schematic structural view of a surgical laser knife to which the present invention is applied. In this structure, beams from a carbon dioxide laser 1 are guided toward the tip of a handpiece 9 by means of a multi-joint reflection system. Mirrors $M_0$ through $M_7$ as used conventionally were all flat.

According to the present invention, conjugate mirrors $M_1$ and $M_2$, as well as $M_3$ and $M_4$, are used so as to reduce the diameter of a bundle of parallel laser beams without deforming the parallism thereof. Mirrors $M_0$, $M_5$, $M_6$ and $M_7$ may be flat. The mirrors $M_1$ and $M_2$ are disposed in skew arrangement and are concave, whereas $M_3$ and $M_4$ are also disposed askew, but in a set of concave or convex pairs (corresponding to the first and second examples, respectively in Table 1).

The pipes 2 through 8 are connected to the mirrors $M_1$ through $M_6$ so that adjacent pipes are perpendicular to each other. Since angles of reflection are all adapted to be 45°, the pipes are disposed so as to be perpendicular.

In so far as depending on flat mirrors, it is impossible to suppress the diametral increase of a bundle of carbon dioxide laser beams, since these beams angularly expand, but the use of conjugate mirrors as practiced in this invention easily enables a narrowing of the diameter of the beam bundle. As a result, in the laser surgical knife as shown in Fig. 7, the hand-piece can be made more slender thereby improving its operability.

The present invention is applicable not only to the change of the diameter of a parallel beam bundle, but also to the formation of a non-parallel beam bundle of small diameter by a combination of spherical mirrors capable of forming a common focus.

The number of mirrors used for formation of one common focus is not always two but may be three or more.

In general, when n mirrors $M_1$, $M_2$, ... $M_n$ are arranged at intervals $_{1, 2, \ldots n-1}$, respectively, the following will be true on the assumption that the radii of curvatures of mirrors are $R_1$, $R_2$, ... $R_n$, respectively.

An image-formation point of the vertical light component reflected by the mirror $M_i$ is indicated by $k_i$ and a point of the transverse light component by $h_i$, when a measurement of the length from the mirror center and along the direction of travel of the light is performed.

When the i-th mirror and the (i + 1)-th one are disposed in $L_w$ arrangement, that is, with normals passing through mirror centers lying in the same plane, the following equations hold:

(1) $L_w$

$$\frac{1}{l_i - k_i} + \frac{1}{k_{i+1}} = \frac{2}{R_{i+1} \cos \theta_{i+1}} \tag{14}$$

$$\frac{1}{l_i - h_i} + \frac{1}{h_{i+1}} + \frac{2 \cos \theta_{i+1}}{R_{i+1}} \tag{15}$$

and, in the case of a $T_w$ arrangement in which the i-th mirror and the (i+1)-th one are disposed askew, the following equations hold:

(2) $T_w$

$$\frac{1}{l_i - k_i} + \frac{1}{h_{i+1}} = \frac{2 \cos \theta_{i+1}}{R_{i+1}} \tag{16}$$

$$\frac{1}{l_i - h_i} + \frac{1}{k_{i+1}} = \frac{2}{R_{i+1} \cos \theta_{i+1}} \tag{17}$$

These equations provide recurrence formulae with respect to $i = 2, \ldots n-1$.
For $i = 1$, the following relations hold:

$$\frac{1}{h_1} = \frac{2 \cos \theta_1}{R_1} \tag{18}$$

$$\frac{1}{k_1} = \frac{2}{R_1 \cos \theta_1} \tag{19}$$

For $i = n$, on the assumption that a common focus lies at the point b behind the mirror $M_n$, modifications of equations (16) and (17) hold, in which $h_{i+1}$ and $k_{i+1}$ in (16) and (17) are to be read as $h_n = k_n = b$.

Even after 2n sets of equations are generated, the arrangement ($L_w$ or $T_w$) between mirrors ($M_i$ and $M_{i+1}$ is determined the intervals $l_1, l_2, \ldots l_{n-1}$ are given, and the angles of incidence are set, a number of unknowns still remain:

    (1)    $R_1, R_2, \ldots R_n$
    (2)    $k_1, k_2, \ldots k_{n-1}$
    (3)    $h_1, h_2, \ldots h_{n-1}$

The number of unknowns is $(3n-2)$ and that of the equations is 2n.

Therefore, $(n-2)$ degrees of freedom remain; whereby the design of the mirrors is made easier since for $R_1, R_2, \ldots, R_n$ values which are easy to design can be selected.

Since the degree of freedom is zero in the case where the number of mirrors is two as previously described, $R_1$ and $R_2$ could be found, but, when the number of mirrors is increased, the radii of curvatures can be chosen freely.

**Claims**

1. A waveguide for parallel beams emitted from a laser comprising a combination of at least two concave mirrors ($M_a$, $M_b$) disposed in series in the beam path, characterized in that said at least two concave mirrors ($M_a$, $M_b$) are spherical mirrors and are arranged in a skew relation such that the normals of the mirrors are lying in different planes.

2. A waveguide as claimed in claim 1, characterized in that an additional pair of concave spherical mirrors is arranged in the beam path in such positions that the beam axis and the normals passing through centers of said additional mirrors are lying in a common plane, whereby the rear focus of said first pair of mirrors coincides with the front focus of said second pair of mirrors.

3. A waveguide as claimed in claim 1, characterized in that an additional pair of convex spherical mirrors ($M_3$, $M_4$) is provided in the beam path and arranged in skew relation such that the normals are lying in different planes, whereby the rear focus of said first pair of mirrors coincides with the front focus of said additional pair of mirrors.

**Patentansprüche**

1. Wellenleiter für von einem Laser emittierte Parallelstrahlen, umfassend eine Kombination aus mindestens zwei in Reihe in den Strahlengang eingesetzten Konkavspiegeln ($M_a$, $M_b$), dadurch gekennzeichnet, daß die mindestens zwei Konkavspiegel ($M_a$, $M_b$) shärische Spiegel sind, die in einer solchen Schräglagenbeziehung angeordnet sind, daß die Normalen der Spiegel in verschiedenen Ebenen liegen.

2. Wellenleiter nach Anspruch 1, dadurch gekennzeichnet, daß ein zusätzliches Paar sphärischer Konkavspiegel im Strahlengang in solchen Positionen angeordnet ist, daß die Strahlachse und die Normalen die durch die Zentren der zusätzlichen Spiegel hindurchgehen, in einer gemeinsamen Ebene liegen, so daß der hintere Brennpunkt des ersten Spiegelpaars mit dem vorderen Brennpunkt des zweiten Spiegelpaars koinzidiert.

3. Wellenleiter nach Anspruch 1, dadurch gekennzeichnet, daß ein zusätzliches Paar sphärischer Konvexspiegel (M, M) im Strahlengang vorgesehen und in einer solchen Schräglagenbeziehung angeordnet ist, daß die Normalen in verschiedenen Ebenen liegen, so daß der hintere Brennpunkt des ersten Spiegelpaars mit dem vorderen Brennpunkt des zusätzlichen Spiegelpaars koinzidiert.

**Revendications**

1. Guide d'ondes pour faisceaux parallèles émis par un laser, comprenant une combinaison d'au moins deux miroirs concaves ($M_a$, $M_b$) montés en série sur le trajet des faisceaux, caractérisé en ce que les deux miroirs concaves au moins ($M_a$, $M_b$) sont des miroirs sphériques et sont disposés en biais de manière que les normales aux miroirs se trouvent dans des plans différents.

2. Guide d'ondes selon la revendication 1, caractérisé en ce qu'une paire supplémentaire de miroirs sphériques concaves est disposée sur le trajet des faisceaux dans des positions telles que l'axe du faisceau et les normales passant par les centres des miroirs supplémentaires se trouvent dans un plan commun, si bien que le foyer arrière de la première paire de miroirs coïncide avec le foyer avant de la seconde paire de miroirs.

3. Guide d'ondes selon la revendication 1, caractérisé en ce qu'une paire supplémentaire de miroirs sphériques convexes ($M_3$, $M_4$) est disposée sur le trajet des faisceaux et est placée en biais de manière sur les normales se trouvent dans des plans différents, si bien que le foyer arrière de la première paire de miroirs coïncide avec le foyer avant de la paire supplémentaire de miroirs.

## FIG.1

## FIG. 2

## FIG. 3

*FIG. 4*

M₁

i₁ 100mm

M₂

b₂+b₁

1350mm

M₃

l₂ 60mm

M₄

*FIG. 5*

M₁ M₂   M₃ M₄

*FIG. 6*

M₁ M₂   M₃ M₄

FIG. 7